# EUROPÄISCHE PATENTANMELDUNG

(11) **EP 0 532 855 A1**
(43) Veröffentlichungstag der Anmeldung: **24.03.1993**
(21) Anmeldenummer: 92111867.5
(22) Anmeldetag: 12.07.1992
(51) Int. Cl.: B29B 7/74

(54) **Vorrichtung zum Herstellen von Kautschukmischungen**

(30) Priorität: 25.07.1991 DE 4124600
(71) Anmelder: Continental Aktiengesellschaft, D-30165 Hannover (DE); Peter, Julius, Dr., A-1130 Wien (AT)
(72) Erfinder: Peter, Julius, Dr., A-1130 Wien (AT); Weckerle, Günter, W-3410 Northeim (DE)
(74) Vertreter: Depmeyer, Lothar

(57) **Zusammenfassung**

Die Erfindung betrifft eine Vorrichtung zum Herstellen von Kautschukmischungen mit einem chargenweise arbeitenden Stempelkneter (1) für die Grundmischung und einem darunter befindlichen stempellosen Kneter (19) für die Fertigmischung, wobei zwischen den beiden Knetern ein Zuführschacht vorgesehen ist. Um einen Stau auf dem stempellosen Kneter auszuschliessen, sind aufgrund der Erfindung zumindest Teile (23,24) der Schachtwände zur Bildung einer Abdeckung für die Einfüllöffnung des stempellosen Kneters nach unten klappbar in der Weise, dass die Abdeckung die Einfüllöffnung wenigstens teilweise verchliesst.

## Beschreibung

Die Erfindung betrifft eine Vorrichtung zum Herstellen von Kautschukmischungen nach dem Oberbegriff des Patentanspruchs 1.

Bei diesen Vorrichtungen wird die Mischkammer des Grundmischers nach Fertigstellung der Grundmischung entleert. Dabei gelangt die Mischung über einen etwa senkrechten Schacht in die Mischkammer des Fertigmischers, der als stempelloser Kneter ausgebildet ist. Dieser ist zwar vergleichsweise gross bemessen, jedoch kann nicht immer vermieden werden, dass sich im sog. Zwickel zwischen den beiden Rotoren des Fertigmischers ein Materialstau einstellt. Die sich dadurch für die Mischung ergebenden Verweilzeiten sind für den Abkühlprozess und das Einmischen der reaktiven Stoffe in die Grundmischung nachteilig.

Der Erfindung liegt im wesentlichen die Aufgabe zugrunde, die eingangs erwähnten Vorrichtungen so auszubilden, dass eine nachteilige sog. Zwickelbildung beseitigt, zumindest aber wesentlich vermindert wird.

Zur Lösung dieser Aufgabe sind erfindungsgemäss zumindest Teile der Schachtwände zur Bildung einer Abdeckung für die Einfüllöffnung der Mischkammer des Fertigmischers nach unten klappbar in der Weise, dass die Abdeckung die Einfüllöffnung wenigstens teilweise verschliesst, wobei es zweckmässig ist, die Teile der Schachtwände an ihrer der Mischkammer zugekehrten Seite der Mischkammer entsprechend zu gestalten und folglich konkav auszuführen.

Dementsprechend erhält die Einfüllöffnung des Fertigmischers eine verschlussartige Abdeckung im Zwickelbereich, um so die erwähnte Werkstoffanhäufung in diesem Bereich auszuschalten bzw. stark zu vermindern. Darüber hinaus erhalten die Schachtwände eine Doppelfunktion; einmal begrenzen sie den nach unten zum Fertigmischer führenden Schacht zur Seite hin, zum anderen können sie durch Ablappen die vorgenannte Aufgabe erfüllen. Es versteht sich, dass die für diesen Zweck vorgesehenen Wandungen bzw. Wandungsteile mit einem Arbeitszylinder versehen werden, um sie zur gegebenen Zeit in die eine oder die andere Wirkstellung verschwenken zu können.

Mit Vorteil werden auch Teile von einander gegenüberliegenden Wandungen des Schachtes benutzt, um zweckmässigerweise symmetrisch zwei hälftige Klappelemente zu erhalten.

Weitere Einzelheiten der Erfindung werden anhand der Zeichnung erläutert, in der Ausführungsbeispiele dargestellt sind.Es zeigen :
- Fig. 1: eine Vorrichtung zum Herstellen von Kautschukmischungen im senkrechten Schnitt und
- Fig. 2: eine Einzelheit aus Fig. 1, jedoch in abgewandelter Ausführung.

Ein Stempelkneter 1 dient zur Herstellung der Grundmischung, dem in Sinne des Pfeiles 2 die Bestandteile der Grundmischung zugeführt werden. Die fertige Grundmischung wird dem Pfeil 3 entsprechend unter Ausnutzung der Schwerkraft in den stempellosen Kneter 4 befördert. Bei der Behandlung der Gummimischung im Kneter 4 ist die Kneterdrehzahl gering, um eine schnelle Abkühlung zu erreichen. Ist die kritische Temperatur erreicht, so werden dem Pfeil 5 entsprechend die reaktiven Stoffe beigegeben. Die Fertigmischung verlässt die Vorrichtung im Sinne des Pfeiles 6.

Der Stempelkneter 1 hat oben einen Arbeitszylinder 9 zum Heben und Senken eines Stempels 1o, der sich zum Beschicken der Mischkammer 13 in seiner oberen Endstellung befindet. Die Bestandteile der Grundmischung werden im Sinne des Pfeiles 2 über einen Speisetrichter 12 zugeführt.Nach der Beschickung wird der Stempel 1o abgesenkt, damit er die Mischkammer 13 mit den beiden Rotoren 14 nach oben hin abschliessen kann. Die meist mit Kühleinrichtungen versehenen Troghälften der Mischkammer 13 sind mit 15 bezeichnet.

Nach unten hin wird die Mischkammer 13 durch einen mittels Arbeitszylinder 16 abklappbaren Sattel 17 abgeschlossen, dessen Spitze 17' in die Mischkammer 13 hineinragt. Nach Fertigstellung der Grundmischung wird die Mischkammer 13 durch Klappen des Sattels 17 nach unten entleert. Sie gelangt über die stempellose Eintrittsöffnung 18 in die Mischkammer 19 mit ebenfalls zwei Rotoren 2o. Im Vergleich zum Stempelkneter 1 hat der Kneter 4 eine wesentlich grössere Mischkammer 19 und auch eine kleinere Drehzahl für die Rotoren 2o, damit die Abkühlung der Fertigmischung sichergestellt ist.

Nach Zugabe der reaktiven Stoffe im Sinne des Pfeiles 5 wird die Ferigmischung abgezogen, indem der Klappsattel 21 nach unten abgeklappt wird, dessen Spitze mit 21' bezeichnet ist.

Der Kneter 4 hat die Besonderheit, dass er im Bereich der normalerweise bzw. zum Beschicken offenen Eintrittsöffnung 18 zwei,im Sinne der Troghälften 22 des Kneters 4 geringfügig gebogene, klappenartige Wandungsteile 23, 24 aufweist, die in Höhe der oberen Schalenränder 25 um eine waagerechte Achse 26 etwa um 90° verschwenkbar sind, und zwar durch nicht näher dargestellte Arbeitszylinder, die aussen an den Wandungsteilen 23, 24, und zwar an den dort befindlichen Augen 27 angreifen.

Sind die beiden symmetrisch in Bezug auf die Mittelachse des Kneters 4 angeordneten Wandungsteile 23, 24 nach oben geklappt, so ist die Eintrittsöffnung 18 vorhanden; dabei bilden die dann etwa senkrecht nach oben stehenden Wandungsteile 23, 24 die seitlichen Elemente des Schachtes zum Zuführen der Mischung für den Kneter 4, also Schachtwände. Die Wandungsteile 23, 24 dienen also einmal der Bildung eines Zuführungsschachtes und zum anderen der Abdeckung der Mischkammer 19, wie dies in der Zeichnung dargestellt ist. In der in der Zeichnung wiedergegebenen Stellung verhindern die Wandungsteile 23, 24 unerwünschte Ansammlungen der Kautschukmischungen im sog. Zwickel. Aus diesen Gründen ragen auch die Wandungsteile 23, 24 in den Raum zwischen die beiden Rotoren hinein, der mit 28 bezeichnet ist.

In der Senkrechtstellung der beiden Wandungsteile 23, 24 liegen diese oben an Widerlagern 29 an.

Es versteht sich, dass die an den Augen 27 angreifenden Arbeitszylinder die Wandungsteile 23, 24 in den beiden Endstellungen fixieren und blockieren, also festhalten. Zudem muss sichergestellt sein, dass die Wandungsteile 23, 24 nur dann die Stellung gemäss Zeichnung einnehmen dürfen, wenn der Mischprozess durchgeführt wird.

Zudem sei erwähnt, dass bei ausreichendem Platz auch ein einstückiges Wandungsteil benutzt werden kann; es soll ebenfalls klappbar sein, muss sich dann aber über die gesamte Breite der Eintrittsöffnung 18 erstrecken.

Zweckmässigerweise sind sowohl die beiden Troghälften 22 als auch die beiden Wandungsteile mit Kühlanschlüssen z.B. in Form der angedeutetten Kühlkanäle versehen.

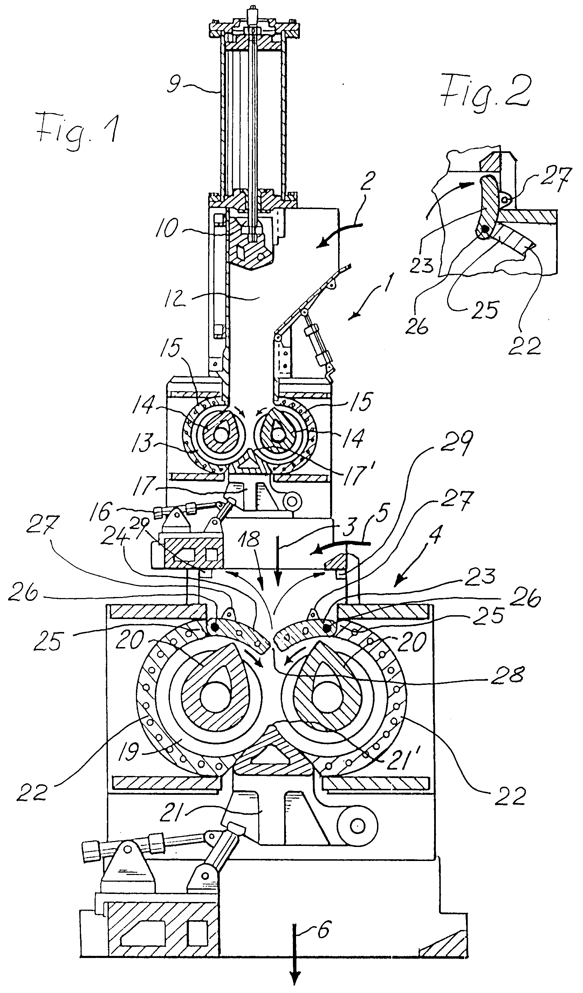

Während gemäss Fig. 1 die Schachtwände 23, 24 nach unten geklappt sind, sind bei der Ausführung gemäss Fig. 2 diese Wände nach oben geklappt, wobei die einander zugekehrten Flächen der Schachtwände 23, 24 die Schachtinnenfläche bilden. Im Gegensatz zu Fig. 1 liegen die Schachtwände 23, 24 nicht an Widerlagern 29, sondern an entsprechend ausgeführten Teilen des Maschinengestells und der Troghälften 22 an. Wichtig ist hierbei ferner, dass bei den symmetrisch angeordneten Schachtwänden 23, 24 der gegenseitige Abstand ihrer Achse 26 so gross ist, dass der gegenseitige Abstand der einander zugekehrten Flächen ( Innenflächen ) der beiden Troghälften 23, 24 so gross ist, dass dieser Abstand zumindest so gross ist wie der gegenseitige Abstand der Drehachsen der beiden Rotoren 2o. Dieser Abstand kann im übrigen so gross gewählt werden, dass er bis zu 1.25 mal grösser ist als der Achsabstand der beiden Rotoren 2o. ( Bei dieser Anordnung der beiden Schachtwände wird vorausgesetzt, dass sich die Eintrittsöffnung 18 mittig über den beiden Rotoren 2o befindet. )

## Patentansprüche

1. Vorrichtung zum Herstellen von Kautschukmischungen mit einem chargenweise arbeitenden Stempelkneter für die Grundmischung und einem darunter befindlichen stempellosen Kneter, in dem die Fertigmischung erstellt wird, wobei zwischen dem Stempelkneter und dem zur Erstellung der Fertigmischung dienenden Kneter ein Schacht zum Zuführen der Gummimischung zum stempellosen Kneter vorgesehen ist, dadurch gekennzeichnet, dass zumindest Teile der Schachtwände (23,24) zur Bildung einer Abdeckung für die Einföllöffnung (18) des stempellosen Kneters (4) nach unten klappbar sind in der Weise, dass die Abdeckung die Einfüllöffnung wenigstens teilweise verschliesst.

2. Vorrichtung nach Anspruch 1, dadurch gekennzeichnet, dass die Teile der Schachtwände (23,24) im abgeklappten Zustand in den Raum (28) zwischen den beiden Rotoren (2o) des stempellosen Kneters (4) hineinragen.

3. Vorrichtung nach Anspruch 1, dadurch gekennzeichnet, dass die der Mischkammer (19) zugekehrte Fläche der Teile der Schachtwände (23,24) der Innenkontur der Mischkammer (19) bzw. ihrer Troghälften (22) angepasst ist.

4. Vorrichtung nach Anspruch 1 und 3, dadurch gekennzeichnet, dass die Innenflächen der Troghälften (22) und der Teile der Schachtwände (23,24) im wesentlichen stufenlos, bei im wesentlichen gleich grosser Krümmung ineinander übergehen.

5. Vorrichtung nach Anspruch 1, dadurch gekennzeichnet, dass zwei symmetrisch in Bezug auf die Mittelachse des Kneters (4) angeordnete, an gegenüberliegenden Stellen des Kneters gelagerte Teile der Schachtwände (23,24) vorgesehen sind.

6. Vorrichtung nach Anspruch 1, dadurch gekennzeichnet, dass die Teile der Schachtwände (23,24) um etwa 9o° schwenkbar sind.

7. Vorrichtung nach Anspruch 1, dadurch gekennzeichnet, dass die Teile der Schachtwände (23,24) mittels Arbeitszylinder klappbar und vorzugsweise auch mittels Arbeitszylinder in den Endstellungen feststellbar sind.

8. Vorrichtung nach Anspruch 1, dadurch gekennzeichnet, dass die Teile der Schachtwände (23,24) in schachtbildender Stellung an Widerlagern (29) anliegen

9. Vorrichtung nach Anspruch 1, dadurch gekennzeichnet, dass die Teile der Schachtwände (23,24) um eine waagerechte Achse (26) klappbar sind, die parallel zur Rotationsachse der Rotoren (2o) verläuft.

10. Vorrichtung nach Anspruch 1 und 2, dadurch gekennzeichnet, dass die Teile der Schachtwände (23,24) derart weit in den Raum zwischen den Rotoren (2o) eingreifen, dass sie nennenswerte Mischungsansammlungen zwischen den Rotoren ( Zwickel ) praktisch unterbinden.

11. Vorrichtung nach Anspruch 1, dadurch gekennzeichnet, dass bei zwei Teilen der Schachtwand (23,24) deren Klappachsen (26) so weit voneinander antfernt sind, dass die einander zugekehrten Flächen dieser Teile einen gegenseitigen Abstand haben, der gleich gross ist oder bis 1.25 mal grösser ist als der Abstand der beiden Drehachsen der Rotoren (2o) des stempellosen Kneters, wenn die beiden Teile nach oben geklappt sind.
